(19) Europäisches Patentamt
European Patent Office
Office européen des brevets

(11) Publication number: **0 376 484 A2**

(12) **EUROPEAN PATENT APPLICATION**

(21) Application number: **89312368.7**

(22) Date of filing: **28.11.89**

(51) Int. Cl.$^5$: **C08L 81/02, C08K 5/54, C08K 3/00**

(30) Priority: **30.11.88 JP 303069/88**

(43) Date of publication of application: **04.07.90 Bulletin 90/27**

(84) Designated Contracting States: **AT BE CH DE ES FR GB GR IT LI LU NL SE**

(71) Applicant: **POLYPLASTICS CO. LTD.**
**3-13, Azuchicho, 2-chome**
**Chuo-Ku Osaka-shi Osaka(JP)**

(72) Inventor: **Tsukamoto, Yoshihito**
**2-3-16, Higashi-kokubun**
**Ichikawa-shi Chiba(JP)**
Inventor: **Nitoh, Toshikatsu**
**3-12-11 Imaizumi**
**Fuji-shi Shizuoka(JP)**

(74) Representative: **Jackson, Peter et al**
**HYDE, HEIDE & O'DONNELL 146 Buckingham Palace Road**
**London SW1W 9TR(GB)**

(54) **Polyarylene sulfide resin composition.**

(57) A polyarylene sulfide resin composition comprises

(A) 100 parts by weight of a polyarylene sulfide resin mainly comprising repeating units represented by the general formula: ( Ar - S ) (wherein Ar is an arylene group), and added thereto

(B) 0.01 to 10 parts by weight of a silicon compound having a mercapto group represented by the general formula (1):

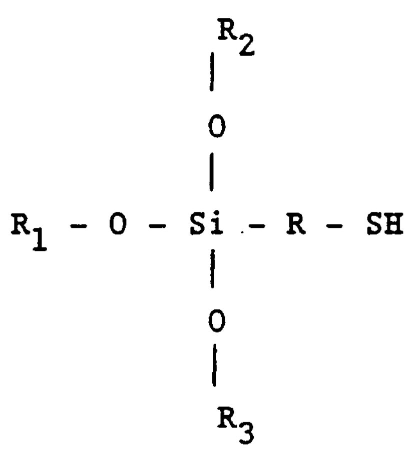

wherein R is a $C_1$-20 divalent aliphatic group and $R_1$, $R_2$ and $R_3$ may be the same or different from each other and are each an alkyl, unsubstituted aryl or substituted aryl group,

and

(C) 0 to 400 parts by weight of a fibrous filler an inorganic nonfibrous filler or a mixture of both of them.

EP 0 376 484 A2

## POLYARYLENE SULFIDE RESIN COMPOSITION

The present invention relates to a polyarylene sulfide resin composition. Particularly, it relates to a polyarylene sulfide resin composition having an improved rate of crystallization which also has excellent heat resistance, moldability and general properties.

Thermoplastic resins which have high heat resistance and chemical resistance and are flame-retardant have become in demand as materials for the components of electrical and electronic appliances, automobile devices and chemical instruments. A polyarylene sulfide resin (PAS) represented by a polyphenylene sulfide resin (PPS) not only provides these properties but is also inexpensive, so that the demand therefor has increased.

However, in molding a polyarylene sulfide resin by such means as injecting, the resin exhibits special crystallization behavior which creates various problems.

More precisely, a polyarylene sulfide resin has a problem that its low rate of crystallisation requires a combination of high-temperature molding and slow cooling to produce a molded article having a high crystallinity.

In order to overcome this problem, the following processes have recently been proposed for crystallizing such a resin at a high rate:

1) a process of adding an oligomeric ester (see Japanese Patent Laid-Open No. 45654/1987),

2) a process of adding another thio ester (see Japanese Patent Laid-Open No. 230849/1987,

3) a process of adding a carboxylic ester (see Japanese Patent Laid-Open No. 230848/1987)

and

4) a process of adding a certain phosphate (see Japanese Patent Laid-Open No. 230850/1987.

However, investigations by the inventors of the present invention reveal that the processes have inherent problems. The additives specified in all of the processes are so poor in heat resistance that evaporation or decomposition gas is evolved in molding and in some cases results in danger of ignition. Additionally their crystallization-accelerating effect tends to be insufficient.

The inventors of the present invention have made intensive studies to develop a polyarylene sulfide resin composition, particularly one which is improved in rate of crystallization.

Their object was to overcome the disadvantage of the prior art that the injection of such a resin necessitates a high molding temperature, so that a molded article having a high crystallinity could instead be obtained even by injection at a low mold temperature and relatively rapid cooling with a shortened molding cycle and so that the resin would be sufficiently thermally stable to evolve no evaporated or decomposition gas in extrusion or molding, thus creating no danger of ignition.

As a result, the inventors of the present invention have found that a polyarylene sulfide resin composition containing a silicon compound represented by the general formula (1) which has both a bulky substituent and a mercapto group is thermally stable and evolves little decomposition or evaporation gas at an extrusion or molding temperature of the resin, thus being free from danger of ignition and that said composition has a much improved rate of crystallization, so that a sufficiently high crystallinity can be attained at a mold temperature lower than that of the prior art and that the molding cycle can be shortened. The present invention has been accomplished on the basis of these findings.

Namely, the present invention relates to a polyarylene sulfide resin composition comprising

(A) 100 parts by weight of a polyarylene sulfide resin mainly comprising repeating units represented by the general formula: -(- Ar - S -)- (wherein Ar is an arylene group), and added thereto

(B) 0.01 to 10 parts by weight of a silicon compoound having a mercapto group represented by the general formula (1):

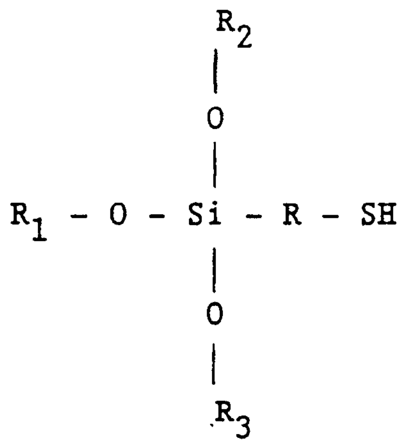

wherein R is a $C_{1\ 20}$ divalent aliphatic group and $R_1$, $R_2$ and $R_3$ may be the same or different from each other and are each an alkyl, unsubstituted aryl or substituted aryl group,
and

(C) 0 to 400 parts by weight of a fibrous filler, an inorganic nonfibrous filler or a mixture of both of them.

In R1, R2 and R3 of the formula, it is preferred that the alkyl has 3 to 12 carbon atoms, the aryl is phenyl, biphenylyl or naphthyl and a substituted aryl is a phenyl having an alkyl substituent with 1 to 10 carbon atoms.

Further, the inventors of the present invention have found that the simultaneous use of the above silicon compound (B) and a nucleating agent which actively generates nuclei is synergistically effective in enhancing the crystallinity attained with a low-temperature mold, though the silicon compound (B) is effective even alone in accelerating the crystallization.

Namely, a polyarylene sulfide resin composition further containing (D) 0.002 to 10 parts by weight of a nucleating agent in addition to the above components (A),(B) and (C) exhibits a further enhanced rate of crystallization, so that the mold temperature can be remarkably lowered and the molding cycle can be shortened.

The base resin to be used as the component (A) in the present invention is a polyarylene sulfide resin mainly comprising repeating units: -(- Ar - S -)- (wherein Ar is an arylene group).

Examples of the arylene group include p-phenylene

( 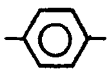 ), m-phenylene ( 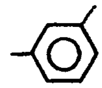 ), o-phenylene

( 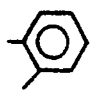 ), substituted phenylene ( 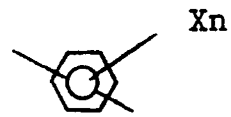 )

wherein X is an alkyl group, preferably $C_{1-6}$ alkyl group or a phenyl group and n is an integer of 1 to 4, p,p'-diphenylene sulfone ( 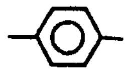 $SO_2$ 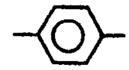 ),

p,p'-biphenylene ( 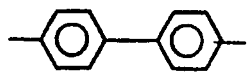 ), p,p'-diphenylene

ether ( 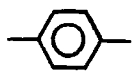 O 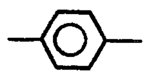 ), p,p'-diphenylene

carbonyl ( 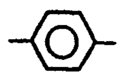 CO 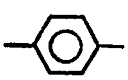 ), and naphthalene

( 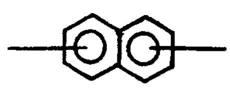 ) groups.

According to the present invention, the polyarylene sulfide resin may be either a polymer having repeating units containing one of the arylene groups described above, i.e., a homopolymer, or in some cases, a copolymer having repeating units different from each other is preferably used in respect of processability.

A particularly preferred example of the above homopolymer is a substantially linear one having p-phenylene sulfide repeating units corresponding to an arylene sulfide unit wherein said arylene group is p-phenylene.

On the other hand, the above copolymer may be any one having two or more kinds of units selected from among the arylene sulfide units described above. Copolymers comprising p-phenylene sulfide and m-phenylene sulfide units are preferable, among which copolymers containing p-phenylene sulfide units in an amount of at least 50 mole %, particularly at least 70 mole % are still preferable in respect of heat resistance, moldability and properties such as mechanical characteristics.

Further, it is preferable that the copolymer contain m-phenylene sulfide units in an amount of 5 to 50 mole % preferably 10 to 25 mole %.

Among the copolymers described above, those having repeating units in blocks (as described in, for example, Japanese Patent Laid-Open No. 14228/1986) are used preferably rather than those having repeating units arranged at random, because the former are superior to the latter in heat resistance and mechanical properties, though both are nearly equivalent to each other in processability.

It is preferred that the polyarylene sulfide resin to be used as the component (A) in the present invention be one having a substantially linear molecular structure which is prepared by the polycondensation of difunctional monomers, though the resin may be one crosslinked by oxidation or heat. A low crosslinking degree is preferred.

Particularly, it is suitable that the polyarylene sulfide resin be a linear one having a melt viscosity (as

determined at 310°C with a shear rate of 5/sec) of 1 x 10 to 5 x $10^5$P, preferably 50 to 5 x $10^4$P, still preferably 100 to 5 x $10^4$P. If the melt viscosity of the resin is less than 10 P, the resin will exhibit such a high fluidity that the melt processing of the resin will be difficult or will unfavorably give a molded article poor in mechanical strength, even if the melt processing is possible. On the other hand, if the melt viscosity exceeds 5 x $10^5$P, the fluidity of the resin will be poor, resulting in difficult melt processing.

The silicon compound having a mercapto group to be used as the component (B) in the present invention may be any one having a structure represented by the general formula (1). Although the group R of the general formula (1) may be any $C_{1-20}$ divalent aliphatic group, it is preferable in respect of heat resistance that the group be an aliphatic group containing 3 or more carbon atoms. Further, it is still preferable in respect of raw material cost that the group be a $C_{3-6}$ aliphatic group, particularly a propylene group.

The groups $R_1$, $R_2$ and $R_3$ may be the same or different from each other and are each an alkyl group containing 3 or more carbon atoms or an unsubstituted or substituted aryl group.

If the groups $R_1$, $R_2$ and $R_3$ are each an alkyl group having the number of carbon atoms of less than 3, the resulting compound will be highly volatile or decomposable to evaporate unfavorably during the processing of the composition, resulting in danger of ignition in some cases. On the contrary, if the silicon compound has too high a molecular weight, the mercapto content of the compound will be too low to accelerate the crystallization sufficiently. Thus, it is preferable that at least one of $R_1$, $R_2$ and $R_3$ be an unsubstituted or substituted aryl group. Particularly, it is still preferable that all of $R_1$, $R_2$ and $R_3$ are phenyl or substituted phenyl groups.

As described above, from the standpoint of crystallization-accelerating effect, heat resistance, raw material cost and ease of synthesis, the silicon compound to be used as the component (B) is preferably a compound represented by the general formula (1) wherein R is a propylene group and $R_1$, $R_2$ and $R_3$ are each a phenyl or lowly substituted phenyl group. Particular examples thereof include compounds A,B and C which will be given below in the Examples as notes of Table 1.

The amount of the crystallization accelerator (B) represented by the general formula (1) to be used in the present invention is 0.01 to 10 parts by weight, preferably 0.1 to 5 parts by weight, per 100 parts be weight of the polyarylene sulfide resin used.

If the amount is too small, the desired effect will not be attained, while if it is too large, the mechanical properties of the resulting composition will be unduly reduced.

Although the filler (C) is not necessarily an essential component in the present invention, the addition thereof is preferable for producing a molded article which is excellent in mechanical strength, heat resistance, dimensional stability (resistance to deformation and warpage), electrical properties and other requirements. The filler (C) may be selected from among fibrous and nonfibrous (powdery, granular to flaky) ones depending upon the duty.

The fibrous filler includes inorganic fibrous materials, for example, glass fiber, asbestos fiber, carbon fiber, silica fiber, silica/alumina fiber, zirconia fiber, boron nitride fiber, silicon nitride fiber, boron fiber, potassium titanate fiber and fibers, of metals such as stainless steel, aluminium, titanium, copper or brass. Among them, glass fiber and carbon fiber are most representative. Further, the fibrous filler includes high-melting organic fibrous materials and particular examples thereof include polyamides, fluororesins and acrylic resins.

The powdery or granular filler includes carbon black, silica, quartz powder, glass bead, glass powder, silicates such as calcium silicate, aluminium silicate, kaolin, talc, clay, diatomaceous earth and wollastonite; metal oxides such as iron oxides, titanium oxide zinc oxide and alumina; metal carbonates such as calcium sulfate and barium sulfate; silicon carbide, silicon nitride, boron nitride and various metal powders.

The flaky filler includes mica, glass flake and various metal foils.

These inorganic fillers may be used alone or as a mixture of two or more of them. The simultaneous use of glass or carbon fiber with a granular or flaky filler is particularly effective in producing an article which is excellent not only in mechanical strength but also in dimensional accuracy and electrical properties.

It is particularly preferable to use a combination of a glass fiber having an average fiber length of 30 to 500μm with an inorganic powdery or granular material having an aspect ratio of 5 or below.

If necessary, a sizing agent or surface treatment is preferably used together with these fillers. Examples thereof include functional compounds such as epoxy, isocyanate, silane and titanate compounds. These compounds may be applied to the filler prior to the preparation of the composition or may be added in the course of preparation thereof.

The amount of the inorganic filler (C) is 0 to 400 parts by weight, preferably 10 to 250 parts by weight, per 100 parts by weight of the polyarylene sulfide resin (A). If the amount is too small, the mechanical

strength will be poor, while if it is too large, the molding will be difficult and the mechanical strength of the resulting molded article will be problematic.

The composition of the present invention may further contain a nucleating agent (D) in addition to the components (A), (B) and (C) to thereby further accelerate the crystallization synergistically with the component (B). Thus, the effect of the present invention is additionally enhanced.

The nucleating agent (D) may be either organic or inorganic suitable inorganic nucleating agents include simple substances such as zinc powder, aluminium powder, graphite and carbon black; metal oxides such as ZnO, MgO, $Al_2O_3$, $TiO_2$, $MnO_2$, $SiO_2$ and $Fe_3O_4$; nitrides such as boron nitride; inorganic salts such as $Na_2CO_3$, $CaCO_3$, Mg $CO_3$, $CaSO_4$, $CaSiO_3$, $BaSO_4$ and $Ca_3(PO_4)_3$ and clay materials such as talc, kaolin, clay and china clay.

Suitable organic nucleating agents include organic salts such as calcium oxalate, sodium oxalate, calcium benzate, calcium phthalate, calcium tartrate and magnesium stearate and heat-resistant polymers and crosslinked products thereof.

Particularly, it is preferable to use boron nitride, a clay material such as talc, kaolin, clay or china clay or a polymer having a crosslinked or branched structure.

The polymer having a crosslinked or branched structure may be either one prepared by the polycondensation of a monomer mixture containing a trifunctional or higher monomer or one prepared by imparting a crosslinked or branched structure to a preliminary prepared polymer. Preferred examples of the branched or crosslinked polymer include crosslinked polyarylene sulfides forming a gel having a melt viscosity (as determined at 310 °C with a shear rate of 5/sec) of $5 \times 10^5$ to $1 \times 10^9$ P in a molten state. Such crosslinked polyarylene sulfides can be preferably prepared by a process of using a crosslinking agent having at least three functional groups, such as polyhalobenzene, in the polymerization of dihalobenzene with an alkali metal sulfide to form a crosslinked structure or a process of thermally curing a polyarylene sulfide resin to enhance the degree of crosslinking.

According to the former process, the crosslinked polyarylene sulfide resin can be prepared by, for example, mixing 100 moles of a dihaloaromatic compound with 0.5 to 20 moles of a polyhaloaromatic compound having at least three halogen substituents, suitably adding thereto water and/or an alkali metal carboxylate and reacting the obtained mixture under such conditions as to give a crosslinked polyarylene sulfide resin forming gel having a melt viscosity of $5 \times 10^5$ to $1 \times 10^9$ in a molten state. According to the latter process, it can be prepared by, for example, curing a polyarylene sulfide resin the presence or absence of oxygen at a high temperature such as 200 °C or above and lower than the melting point of the resin for such a time as to give a polymer forming a gel having a melt viscosity of $5 \times 10^5$ to $1 \times 10^9$P in a molten state, thus enhancing the degree of crosslinking.

The polyarylene sulfide resin of a polymerization crosslinking type prepared by the former process is superior to that of a thermal crosslinking type prepared by the latter process in crystallization-accelerating effect, color thermal stability, and therefore the latter is being preferably used.

Some of the nucleating agents described above also fall into the category of an inorganic filler and can fulfill both functions. In any case, the amount of the nucleating agent to be used is 0.002 to 10 parts by weight, preferably 0.02 to 5 parts by weight per 100 parts by weight of the polyarylene sulfide resin. If the amount thereof is too small, the rate of crystallization will not be sufficiently enhanced.

According to the present invention, another thermoplastic resin may be simultaneously used in such a small amount as not to hinder the object of the present invention. The thermoplastic resin is any one which is stable at high temperature and examples thereof include aromatic polyesters comprising aromatic dicarboxyle acids and diols or hydroxy carboxylic acids, such as polyethylene terephthalate and polybutylene terephthalate; polyamide, polycarbonate, ABS, polyphenylene oxide, polyalkyl acrylate, polyacetal, polysulfone, polyether sulfone, polyether imide, polyether ketone and fluororesins. These thermoplastic resins may be used also as a mixture of two or more of them.

Further, the composition of the present invention may suitably contain additives which are conventionally added to a thermoplastic or thermosetting resin. Examples of such additives include stabilizers such as antioxidants and ultraviolet absorbers, antistatic agents, flame retardants, coloring agents, such as dyes and pigments, and lubricants.

The polyarylene sulfide resin composition of the present invention can be prepared by a conventional process for the preparation of a synthetic resin composition and with conventional equipment therefor. Namely, the required components are mixed and kneaded together and extruded with a single- or twin-screw extruder to obtain pellets. In the preparation, a part of the components may be mixed, as a master batch, with the residual part thereof, followed by molding. Further, in order to facilitate the dispersion and mixing of necessary components, a part or the whole of the polyarylene sulfide resin may be preliminarily ground, followed by mixing and extrusion.

The polyarylene sulfide resin composition according to the present invention exhibits a remarkably enhanced rate of crystallization as compared with that of the composition according to the prior art and therefor has the following advantages:

(1) a highly crysalline molded article can be obtained even by molding at a mold temperature 10 to 60° C lower than a conventional one,

(2) the molded article according to the present invention is excellent in dimensional stability, surface gloss and mold release characteristics,

(3) the molding cycle is shortened to bring about an enhance productivity and a lowered molding cost,

(4) the mold temperature can be lowered, so that the operation can be easily carried out with high safety,

(5) the composition of the present invention is excellent in heat stability to evolve little evaporation or decomposition gas of additives during the molding or annealing, thus being substantially free from problems resulting from the gas, and

(6) the mechanical properties are excellent.

[Examples]

The present invention will now be described in more detail by referring to the following Examples, though it is not limited by them.

Examples 1 to 14 and Comparitive Examples 1 to 4.

The compounds listed in Table 1 of an amount specified therein were added to a polyphenylene sulfide resin ("Fortlon KPS"; a product of Kureha Chemical Industry Co., Ltd), followed by premixing with a Henschel mixer for 5 minutes.

A commercially available glass fiber (diameter: 13 µm, length: 3mm) was added in an amount as specified in Table 1 to the obtained premix, followed by mixing with a blender for 2 minutes. The obtained mixture was extruded at a cylinder temperature of 310° C to obtain pellets of a polyphenylene sulfide resin composition.

The pellets were molded into a flat test piece (50 mm x 70 mm x 3 mm) with an injection molding machine at a cylinder temperature of 320° C and a mold temperature as specified in Table 1. This test piece was examined for crystallinity with a rad-rd X-ray diffractometer mfd. by Rigaku Denki K.K.

Further, the test piece was kept in an atmosphere at room temperature (23° C) and a humidity of 50% and the dimensions of the resulting test piece were determined to calculate the after-shrinkage.

Furthermore, the resin molten in the injection molding was subjected to free flow to determine the amount of the gas evolved therefrom.

The surface gloss and mold release characteristics were also evaluated. The results are shown in Table 1.

Separately, another standard test piece was prepared and examined for tensile strength and elongation. The results are shown in Table 2.

The compounds used here are shown below.

A :

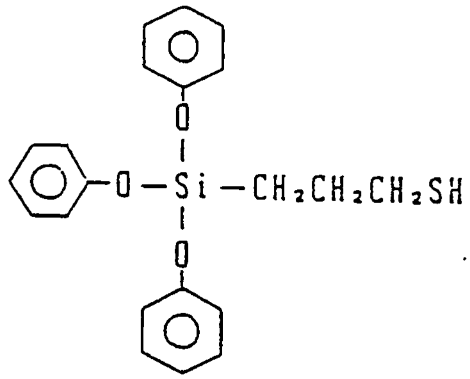

B :

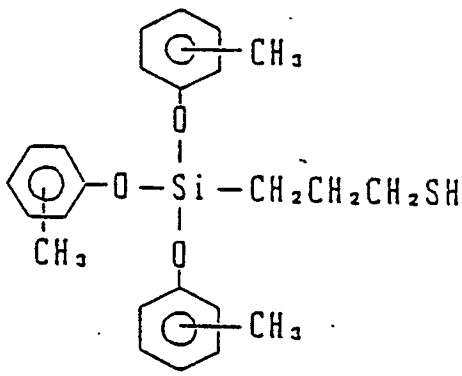

C :

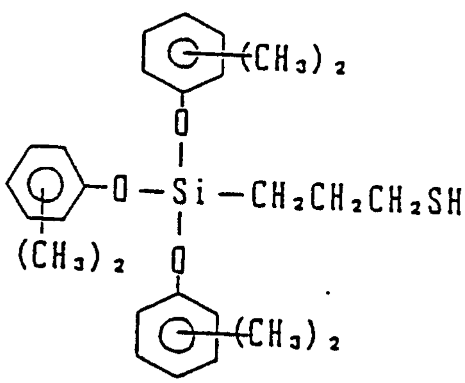

D :

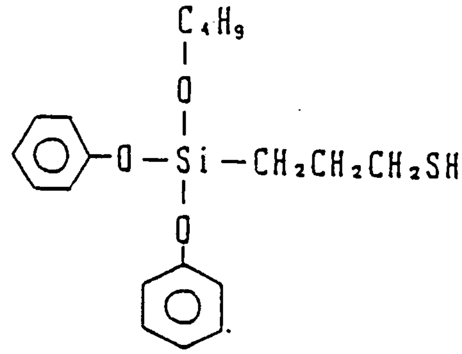

E :

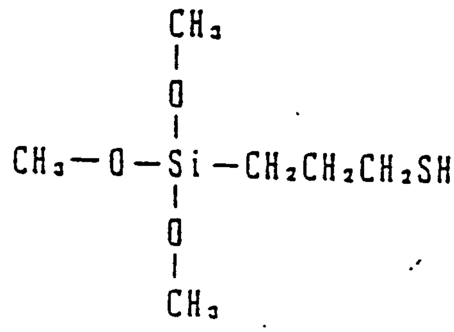

F: talc
G: boron nitride
H: crosslinked polyphenylene sulfide resin, melt viscosity of 1 x $10^7$ P (at 310 °C, shear rate of 5/sec)

Table 1

| | Composition | | | | | |
|---|---|---|---|---|---|---|
| | (A) PPS (pts. by wt.) | (C) glass fiber (pts. by wt.) | (B) mercapto silicon compound type | (B) mercapto silicon compound (pts. by wt.) | (D) nucleating agent type | (D) nucleating agent (pts. by wt.) |
| Ex. 1 | 100 | 0 | A | 1.5 | - | 0 |
| Ex. 2 | 100 | 65 | A | 0.1 | - | 0 |
| Ex. 3 | 100 | 65 | A | 0.5 | - | 0 |
| Ex. 4 | 100 | 65 | A | 1.5 | - | 0 |
| Ex. 5 | 100 | 65 | A | 3 | - | 0 |
| Ex. 6 | 100 | 200 | A | 1.5 | - | 0 |
| Ex. 7 | 100 | 65 | B | 1.5 | - | 0 |
| Ex. 8 | 100 | 65 | C | 1.5 | - | 0 |
| Ex. 9 | 100 | 65 | D | 1.5 | - | 0 |
| Ex. 10 | 100 | 65 | A | 1.5 | F | 1.0 |
| Ex. 11 | 100 | 65 | A | 1.5 | F | 3.0 |
| Ex. 12 | 100 | 65 | A | 1.5 | G | 0.1 |
| Ex. 13 | 100 | 65 | B | 1.5 | F | 1.0 |
| Ex. 14 | 100 | 65 | A | 1.5 | H | 3.0 |
| Comp. Ex. 1 | 100 | 0 | - | 0 | - | 0 |
| Comp. Ex. 2 | 100 | 65 | - | 0 | - | 0 |
| Comp. Ex. 3 | 100 | 65 | E | 1.5 | - | 0 |
| Comp. Ex. 4 | 100 | 65 | - | 0 | F | 3.0 |

Table 1 (cont'd)

| | Mold temperature: 90°C | | | | | Mold temperature: 130°C | | | | |
|---|---|---|---|---|---|---|---|---|---|---|
| | crystallinity (%) | after-shrinkage (%) | gas evolution | surface gloss | mold release characteristics | crystallinity (%) | after-shrinkage (%) | gas evolution | surface gloss | mold release characteristics |
| Ex. 1 | 27 | 0.05 | no | good | good | 31 | 0.04 | no | good | excellent |
| Ex. 2 | 15 | 0.11 | no | passable | passable | 33 | 0.05 | no | good | excellent |
| Ex. 3 | 22 | 0.09 | no | passable | passable | 33 | 0.04 | no | excellent | excellent |
| Ex. 4 | 31 | 0.04 | no | good | excellent | 35 | 0.04 | no | excellent | excellent |
| Ex. 5 | 33 | 0.04 | slight | good | excellent | 35 | 0.04 | slight | good | excellent |
| Ex. 6 | 37 | 0.04 | no | good | good | 37 | 0.03 | no | good | excellent |
| Ex. 7 | 28 | 0.06 | no | good | good | 32 | 0.05 | no | excellent | excellent |
| Ex. 8 | 24 | 0.08 | no | passable | passable | 33 | 0.05 | no | good | excellent |
| Ex. 9 | 22 | 0.08 | slight | good | good | 30 | 0.05 | slight | good | excellent |
| Ex. 10 | 37 | 0.05 | no | excellent | excellent | 39 | 0.04 | no | excellent | excellent |
| Ex. 11 | 38 | 0.05 | no | excellent | excellent | 39 | 0.04 | no | excellent | excellent |
| Ex. 12 | 35 | 0.05 | no | excellent | excellent | 38 | 0.04 | no | excellent | excellent |
| Ex. 13 | 36 | 0.06 | no | good | excellent | 33 | 0.04 | no | excellent | excellent |
| Ex. 14 | 40 | 0.04 | no | excellent | excellent | 40 | 0.04 | no | excellent | excellent |
| Comp. Ex. 1 | 1 | 0.43 | no | no good | no good | 20 | 0.13 | no | good | good |
| Comp. Ex. 2 | 2 | 0.15 | no | no good | no good | 23 | 0.09 | no | good | good |
| Comp. Ex. 3 | 15 | 0.11 | observed | no good | no good | 27 | 0.08 | observed | excellent | excellent |
| Comp. Ex. 4 | 13 | 0.12 | no | no good | no good | 25 | 0.08 | no | excellent | excellent |

Table 2

| | Mold temperature 90 °C | | Mold temperature 130 °C | |
|---|---|---|---|---|
| | tensile strength (kg/cm$^2$) | tensile elongation (%) | tensile strength (kg/cm$^2$) | tensile elongation (%) |
| Ex. 1 | 920 | 4.0 | 920 | 3.8 |
| Ex. 2 | 1730 | 1.68 | 1760 | 1.64 |
| Ex. 3 | 1740 | 1.66 | 1770 | 1.64 |
| Ex. 4 | 1760 | 1.65 | 1760 | 1.65 |
| Ex. 5 | 1730 | 1.64 | 1740 | 1.64 |
| Ex. 6 | 1960 | 1.02 | 1960 | 1.02 |
| Ex. 7 | 1750 | 1.66 | 1760 | 1.65 |
| Ex. 8 | 1710 | 1.67 | 1740 | 1.64 |
| Ex. 9 | 1700 | 1.66 | 1720 | 1.65 |
| Ex. 10 | 1780 | 1.61 | 1790 | 1.60 |
| Ex. 11 | 1760 | 1.60 | 1760 | 1.60 |
| Ex. 12 | 1760 | 1.62 | 1760 | 1.61 |
| Ex. 13 | 1770 | 1.61 | 1780 | 1.60 |
| Ex. 14 | 1790 | 1.63 | 1800 | 1.63 |
| Comp. Ex. 1 | 910 | 4.9 | 920 | 4.1 |
| Comp. Ex. 2 | 1660 | 1.74 | 1730 | 1.68 |
| Comp. Ex. 3 | 1630 | 1.60 | 1650 | 1.58 |
| Comp. Ex. 4 | 1680 | 1.65 | 1720 | 1.61 |

## Claims

1. A polyarylene sulfide resin composition comprising:

(A) 100 parts by weight of a polyarylene sulfide resin mainly comprising repeating units represented by the general formula: -(-Ar-S-)- (wherein Ar is an arylene group), and added thereto

(B) 0.01 to 10 parts by weight of a silicon compound having a mercapto group represented by the general formula (1):

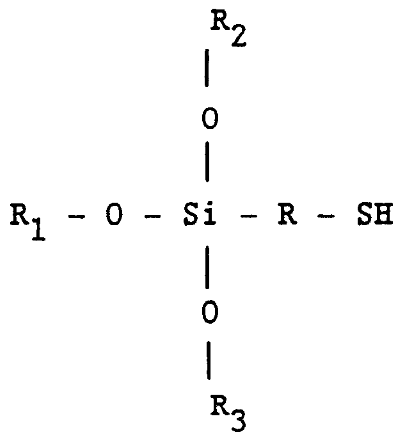

wherein R is a $C_{1-20}$ divalent aliphatic group and $R_1$, $R_2$ and $R_3$ may be the same or different from each other and are each an alkyl group containing 3 or more carbon atoms, or an unsubstituted or substituted aryl group,

and

(C) 0 to 400 parts by weight of a fibrous filler, an inorganic nonfibrous filler or a mixture thereof.

2. A polyarylene sulfide resin composition as set forth in claim 1, wherein the polyarylene sulfide (A) is a substantially linear homopolymer having p-phenylene sulfide repeating units.

3. A polyarylene sulfide resin composition as set forth in claim 1, wherein the polyarylene sulfide (A) is a copolymer comprising p-phenylene sulfide and m-phenylene sulfide repeating units.

4. A polyarylene sulfide resin composition as set forth in claim 3, wherein the m-phenylene sulfide units are present in an amount of 5 to 50 mole % of the copolymer.

5. A polyarylene sulfide resin composition as set forth in any preceding claim, wherein the polyarylene sulfide (A) has a substantially linear molecular structure and a melt viscosity (as determined at 310 °C with a shear rate of 5/sec) of $1 \times 10$ to $5 \times 10^5$ P.

6. A polyarylene sulfide resin composition as set forth in any preceding claim, wherein R in the general formula (1) of the silicon compound (B) is a $C_{3-6}$ aliphatic group.

7. A polyarylene sulfide resin composition as set forth in claim 1, wherein $R_1$, $R_2$ and $R_3$ are all phenyl or substituted phenyl groups.

8. A polyarylene sulfide resin composition as set forth in any preceding claim, wherein the amount of the silicon compound (B) is 0.1 to 5 parts by weight per 100 parts of the polyarylene sulfide (A).

9. A polyarylene sulfide resin composition as set forth in any preceding claim, which further contains (D) 0.002 to 10 parts by weight of a nucleating agent.

10. A polyarylene sulfide resin composition as set forth in claim 9, wherein said nucleating agent (D) is one or more members selected from among boron nitride, kaolin, talc, clay, china clay and polymers having a crosslinked or branched structure.